# EUROPEAN PATENT APPLICATION

(11) **EP 3 106 713 A1**
(43) Date of publication of application: **21.12.2016**
(21) Application number: 15001811.7
(22) Date of filing: 18.06.2015
(51) Int. Cl.: F16H 19/06, G09B 29/10, B43L 13/04

(54) **TRACTION ARRANGEMENT COMPRISING A BELT AND METHOD FOR DRIVING THE SAME**

(71) Applicant: Euroimmun Medizinische Labordiagnostika AG, 23560 Lübeck (DE)
(72) Inventor: Eggert, Lennart, 23560 Lübeck (DE)

(57) **Abstract**

The invention relates to a traction arrangement configured for driving a belt, to a method for driving a belt and to the use of the traction arrangement in at least one of the following applications: in a crane, in a plotter, for driving a steel cable, a rope, a chain and a ball path. The traction arrangement (1) comprises a first guideway (3) and a second guideway (4), wherein each guideway (3, 4) is fixed to mounting means (5), wherein the first and the second guideway (3, 4) are spaced parallel on a surface of the traction arrangement (1), a slide (6) movable on the surface and configured for spanning the surface through a lateral motion along a first axis, wherein the slide (6) is arranged essentially perpendicular to the first and the second guideway (3, 4), a jack (7) connected to the slide (6), wherein the jack (7) is movable along the slide (6) through a lateral motion along a second axis, the second axis being perpendicular to the first axis, and a first motor (8) for driving a first belt (2), wherein the first motor (8) is rotatably arranged and controls traction of the first belt (2) such that when the first motor (8) rotates in counterclockwise direction or in clockwise direction, the jack (7) moves along the second axis such that a second position coordinate of the jack (7) along the second axis is adjustable. In this way, a possibility for driving a belt is provided that is simple, accurate, requires no adjustment in action, in which no cable spans have to be dragged and an unwanted diagonal motion of a slide is suppressed.

## Description

The invention relates to a traction arrangement configured for driving a belt and to a method for driving a belt. Further, the invention relates to the use of the traction arrangement in at least one of the following applications: in a crane, in a plotter, for driving a steel cable, a rope, a chain and a ball path.

US 2,785,941 describes a plotting-board drive employing two motors, each motor providing a diagonal component of motion. A synchronization of both motors is required.

Conventional systems for driving a stylus of a plotting board, such as used for maritime or air navigation depending on the nature of the plot are complicated, require considerable adjustment also during action and thus are not user-friendly. In such systems the frictional resistance and parasitic masses are relatively high since the electric load and sensors have to be dragged within the system.

It is the object of the invention to provide a possibility for driving a belt that is simple, accurate, requires no adjustment in action, in which no cable spans have to be dragged and an unwanted diagonal motion of a slide is suppressed.

This object is achieved by the subject matter of the independent claims. Preferred embodiments are defined in the sub claims.

According to a first aspect of the invention, this object is achieved by a traction arrangement configured for driving a belt, comprising: a first guideway and a second guideway, wherein each guideway is fixed to mounting means, wherein the first and the second guideway are spaced parallel on a surface of the traction arrangement, a slide movable on the surface and configured for spanning the surface through a lateral motion along a first axis, wherein the slide is arranged essentially perpendicular to the first and the second guideway, a jack connected to the slide, wherein the jack is movable along the slide through a lateral motion along a second axis, the second axis being perpendicular to the first axis, and a first motor for driving a first belt, wherein the first motor is rotatably arranged and controls traction of the first belt such that when the first motor rotates in counterclockwise direction or in clockwise direction, the jack moves along the second axis such that a second position coordinate of the jack along the second axis is adjustable.

According to other preferred embodiments of the invention, only a single guideway is applied, wherein the single guideway is spaced parallel to a freely suspended end on a surface of the traction arrangement. Hence, the term "freely suspended end" can also be interpreted as being "a second guideway" in the following context.

It is an idea of the invention to avoid an unwanted diagonal motion of the slide and to minimize friction losses by providing a lower mass. Further, electric loads and sensors are not moved or dragged but stay fixed in a housing of the traction arrangement. The term "essentially perpendicular" preferably means perpendicular but, however, referring to the arrangement of the guideways with respect to the slide the term can also mean that the slide is not completely perpendicular to the guideways but may comprise a non-zero angle. In the latter case, a length of the slide is preferably shorter than a distance between both guideways so that the slide remains movable along the first axis. On the other hand, the slide is preferably not arranged parallel to the guideways.

According to a preferred embodiment of the invention, the traction arrangement comprises four pulleys that are rotatably mounted on four axles, wherein the axles are laterally displaced from the slide and are configured for guiding the jack along the second axis. Hence, the movement of the jack is supported and directed by the four pulleys. Preferably, an arrangement of the axles comprises a rectangular shape such that a position of each one of the four axles corresponds to a position of each corner of the slide, wherein each of the corresponding positions are laterally displaced by a predetermined distance to one another. In case the predetermined distance is zero, there is no lateral displacement between the corners of the slide and the axles, i.e. these elements are spaced one upon the other. The slide is preferably arranged close to the axles and comprises four corners.

According to a preferred embodiment of the invention, the jack comprises at least one pulley, more preferably at least two pulleys coupled to each other, each pulley being movable along the second axis. Hence, the pulleys support the movement of the jack along the slide. Preferably, both pulleys are coupled to each other. Therefore, both pulleys are movable together.

According to a preferred embodiment of the invention, the traction arrangement comprises a second motor being rotatably arranged and controlling traction of a second belt. Preferably, when the second motor rotates in counterclockwise direction or in clockwise direction, the jack moves along the first axis such that a first position coordinate of the jack along the first axis is adjustable. In this way, a two-dimensional movement in a plane becomes possible and a Cartesian separation in an x- and in a y-direction takes place. Both motors do not influence each other and also a synchronization is not required. The traction arrangement preferably comprises a further pulley that is configured for connecting the second belt to the second motor via the slide. The further pulley is preferably provided at an opposite end to the second motor in the traction arrangement. Preferably, the further pulley is connected to the mounting means. The first motor and/or the second motor is/are preferably connected to the mounting means. The traction arrangement is preferably configured for moving the jack stepwise, such that the jack is either moved to the first position coordinate along the first axis and then to the second position coordinate along the second axis or vice versa, or the traction arrangement is preferably configured for moving the jack 7 simultaneously, such that a desired diagonal motion of the jack (7) is provided. Hence, no unwanted diagonal motion is obtained and a Cartesian separation for the movement of the jack takes place. In this way, an unwanted diagonal motion of the slide is suppressed. Preferably, the traction arrangement comprises a stylus connected to the jack, wherein the movement of the jack is coupled to the movement of the stylus such that the stylus is moveable stepwise or simultaneously. The stylus is preferably adapted to plunge into different probes. According to other preferred embodiments of the invention, the stylus is exchanged by a grab or by any other device or tool.

According to a preferred embodiment of the invention, the traction arrangement comprises a computing unit configured for controlling the motion of the first and/or the second belt that is/are relatively moving to the surface of the traction arrangement. Hence, the traction arrangement is controllable via a computing unit and can thus be automatized.

According to a preferred embodiment of the invention, each of the first motor and the second motor is at least partly integrated into a housing of the traction arrangement. Hence, parasitic masses and friction resistances are minimized and the electric load is included into the housing. The housing preferably comprises a predetermined length of cable span. The stylus is preferably clamped to the cable span that is stretched at the housing of the traction arrangement.

According to a preferred embodiment of the invention, each of the first motor and the second motor comprises at least one of a stepping motor, a servomotor, a hydraulic motor and an electric motor configured for driving a pulley and for being coupled to the pulley through a shaft. According to other preferred embodiments of the invention, each motor is configured for driving a pulley and for being coupled to the pulley through an axle. Different kinds of motors can thus be combined and although the power may be limited dependent on the motor, relatively high velocities can be achieved. For instance, a stepping motor can be driven with a velocity of 1.5 meters per second. The traction arrangement is preferably movable along a third axis spanning the height of the traction arrangement in a room. In this way, a three-dimensional movement of the traction arrangement becomes possible. Preferably, a third motor is used for moving the traction arrangement along the third axis.

It is a further idea of the invention to reduce pressure on the belts and on the axles or shafts and to reduce vibrations in the total system. Furthermore, an unwanted diagonal motion of the slide is suppressed and a synchronization of both motors is not required. Moreover, if a movement along the second axis is desired, it is not necessary to move the slide but to move the jack only and no readjustments during action are required.

According to a second aspect of the invention, above-mentioned object is achieved by a method for driving a belt, comprising the steps: a) spacing a first and a second guideway parallel on a surface, b) arranging a slide essentially perpendicular to the first and the second guideway, wherein the slide is movable on the surface through a lateral motion along a first axis, c) connecting a jack to the slide, wherein the jack is moveable along the slide through a lateral motion along a second axis, the second axis being perpendicular to the first axis, and d) driving the belt with the first motor that is rotatably arranged and controls traction of the first belt such that when the first motor rotates in counterclockwise direction or in clockwise direction, the jack moves along the second axis such that a second position coordinate of the jack along the second axis is adjustable. Preferably, the method comprises the step of driving a second belt with a second motor that is rotatably arranged and controls traction of the second belt such that when the second motor rotates in counterclockwise direction or in clockwise direction, the jack moves along the first axis such that a first position coordinate of the jack along the first axis is adjustable. Preferably, when the jack moves along the first axis also the slide moves along the first axis.

According to a third aspect of the invention, above-mentioned object is achieved by the use of the traction arrangement according to the first aspect of the invention in at least one of the following applications: in a crane, in a plotter, for driving a steel cable, a rope, a chain and a ball path.

These and other aspects of the invention will be apparent from and elucidated with reference to the embodiments described hereinafter which should be considered as examples of the invention without limiting the scope of the invention.

In the drawings:
- Fig. 1: exemplary shows a traction arrangement driven by a single motor according to a first preferred embodiment of the invention;
- Fig. 2: shows a traction arrangement driven by two motors according to a second preferred embodiment of the invention;
- Fig. 3: shows a traction arrangement after moving to a second position according to the second preferred embodiment of the invention; and
- Fig. 4: illustrates the steps of a method for driving a belt according to a third preferred embodiment of the invention.

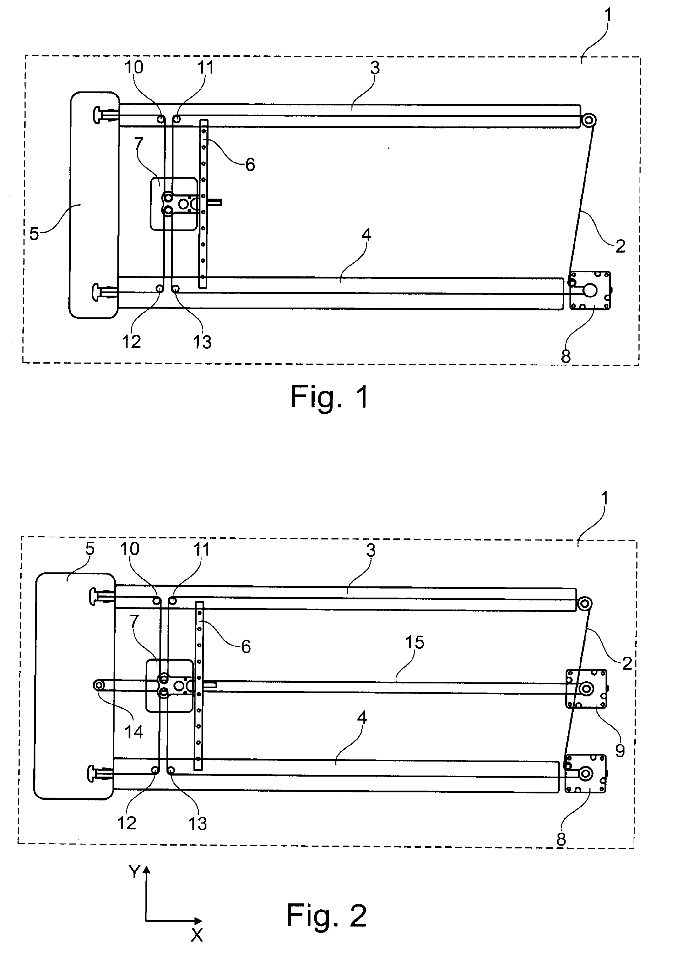

Fig. 1 shows a traction arrangement driven by a single motor according to a first preferred embodiment of the invention. The traction arrangement 1 consists of two guideways 3, 4 that are spaced parallel in a plane. The plane corresponds to a surface of the traction arrangement in this first preferred embodiment. A first motor 8 is provided that is adapted for driving a first belt 2. Each guideway 3, 4 is fixed to mounting means 5 at one end of the traction arrangement 1. In other preferred embodiments, each guideway 3, 4 can be fixed to different mounting means.

A jack 7 is connected to a slide 6, wherein the slide 6 is movable along a first axis through a lateral motion and the jack 7 is moveable along the slide, i.e. along a second axis through a lateral motion. The jack 7 is guided along the slide 6 through an arrangement of four pulleys 10, 11, 12, 13 that are rotatably mounted on four axles, wherein the arrangement of the axles comprises a rectangular shape and a position of each one of the four axles corresponds to a position of each corner of the slide 6. In this first preferred embodiment, when the first motor 8 rotates, for instance in a clockwise direction of rotation, the jack 7 moves along the slide 6, i.e. along the second axis.

If the first motor 8 rotates in clockwise direction, the jack 7 moves "upward" to the pulleys 10, 11. If the first motor 8 rotates in counterclockwise direction, then the jack 7 moves "downward" to the pulleys 12, 13. In this first preferred embodiment, the slide 6 is not moved and remains in a first position. The jack comprises two pulleys coupled to each other, each pulley being movable along the second axis. Further, a stylus (not shown) is connected to the jack 7, wherein the movement of the jack 7 is coupled to the movement of the stylus. In this first preferred embodiment, a stepping motor for movement along the y-axis is used that requires a minimum amount of power. In other preferred embodiments of the invention, servomotors with a larger power are used.

Fig. 2 shows a traction arrangement driven by two motors according to a second preferred embodiment of the invention. All elements of Fig. 2 correspond to the elements of Fig. 1 but, however, a second motor 9 is used that is rotatably arranged and controls traction of a second belt 15. The second motor 9 works independent from the first motor 8. In the second preferred embodiment of the invention, the slide 6 moves on the surface and spans the surface through a lateral motion along a first axis. In Fig. 2, like in Fig. 1, the slide 6 is arranged perpendicular to the first and the second guideway 3, 4. In this second preferred embodiment, the first motor 8 is a stepping motor and the second motor 9 is a servomotor.

A Cartesian separation of both axes, namely the first axis and the second axis, the second axis being perpendicular to the first axis, is thus provided. A further pulley 14 is provided, wherein the pulley 14 is configured for connecting the second belt 15 to the second motor 9 via the slide 6. The further pulley 14 is connected to the mounting means 5 like both guideways 3, 4. When the second motor 9 rotates in counterclockwise direction, the jack moves along the first axis such that the first position coordinate of the jack along the first axis is adjustable. However, as shown in Fig. 2, the jack 7 is already in its final position at a first end of the traction arrangement 1 with regard to the movement along the first axis. In the second preferred embodiment, the traction arrangement moves the jack 7 stepwise. Hence, the jack 7 is moved to the first position coordinate along the first axis and then to the second position coordinate along the second axis. In other preferred embodiments, the jack 7 is moved to the second position coordinate along the second axis and then to the first position coordinate along the first axis. In still other preferred embodiments, the jack 7 is moved simultaneously along both axes.

Furthermore, a computing unit is used in this second preferred embodiment, wherein the computing unit controls the motion of the first and the second belt 2, 15 that are relatively moving to the surface of the traction arrangement 1. Both motors 8, 9 are integrated into a housing of the traction arrangement 1.

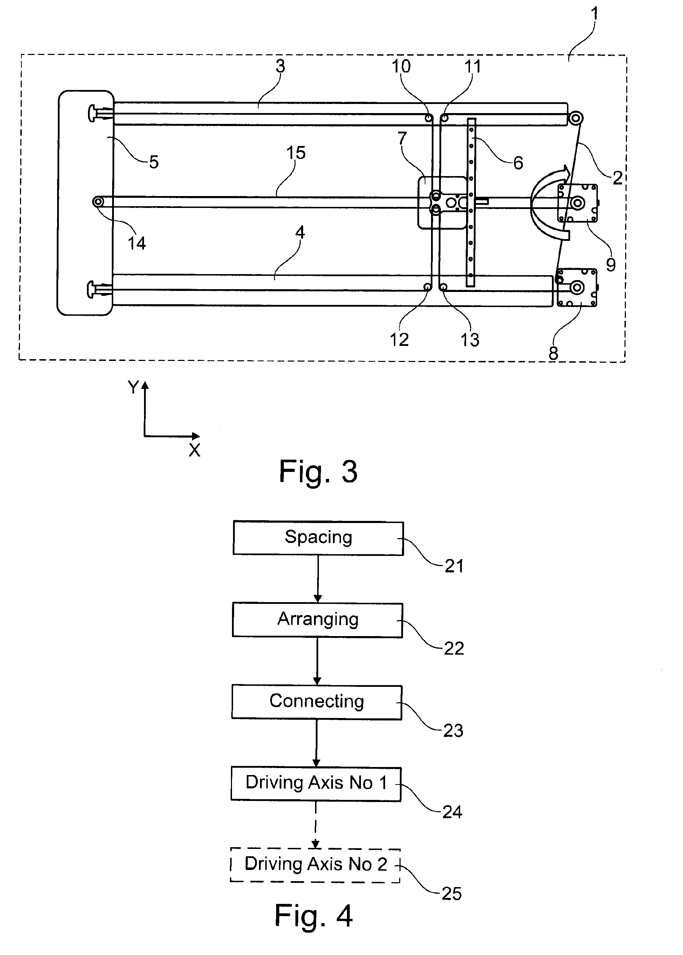

Fig. 3 shows the traction arrangement driven by two motors according to the second preferred embodiment of the invention. The jack 7 is coupled to the slide 6. When the second motor 9 rotates in clockwise direction (as indicated by the arrow in Fig. 3), the jack 7 and also the slide 6 move along the first axis such that the first position coordinate of the jack 7 along the first axis is adjusted. Hence, when the second motor 9 rotates fully to the clockwise direction, the jack 7 reaches its final position at a second end of the traction arrangement with regard to its movement along the first axis.

Fig. 4 illustrates the steps of a method for driving a belt according to a third preferred embodiment of the invention. In a first step, a first and a second guideway are spaced 21 parallel on a surface. In a second step, a slide is arranged 22 perpendicular to the first and the second guideway, wherein the slide is movable on the surface through a lateral motion along a first axis. Then, in a third step, a jack is connected 23 to the slide, wherein the jack is movable along the slide through a lateral motion along a second axis, the second axis being perpendicular to the first axis. In a fourth step, a first belt is driven 24 with a first motor that is rotatably arranged and controls traction of the first belt. When the first motor rotates, the jack moves along the second axis such that a second position coordinate of the jack along the second axis is adjusted. In a fifth step, a second belt is driven 25 with a second motor such that when the second motor rotates, the jack moves along the first axis such that the first position coordinate of the jack along the first axis is adjustable.

As explained above, the invention relates to a traction arrangement configured for driving a belt, to a method for driving a belt and to the use of the traction arrangement in at least one of the following applications: in a crane, in a plotter, for driving a steel cable, a rope, a chain and a ball path. The traction arrangement 1 comprises a first guideway 3 and a second guideway 4, wherein each guideway 3, 4 is fixed to mounting means 5, wherein the first and the second guideway 3, 4 are spaced parallel on a surface of the traction arrangement 1, a slide 6 movable on the surface and configured for spanning the surface through a lateral motion along a first axis, wherein the slide 6 is arranged essentially perpendicular to the first and the second guideway 3, 4, a jack 7 connected to the slide 6, wherein the jack 7 is movable along the slide 6 through a lateral motion along a second axis, the second axis being perpendicular to the first axis, and a first motor 8 for driving a first belt 2, wherein the first motor 8 is rotatably arranged and controls traction of the first belt 2 such that when the first motor 8 rotates in counterclockwise direction or in clockwise direction, the jack 7 moves along the second axis such that a second position coordinate of the jack 7 along the second axis is adjustable. In this way, a possibility for driving a belt is provided that is simple, accurate, requires no adjustment in action, in which no cable spans have to be dragged and an unwanted diagonal motion of a slide is suppressed.

## Claims

1. A traction arrangement (1) configured for driving a belt (2, 15), comprising:
a first guideway (3) and a second guideway (4), wherein each guideway (3, 4) is fixed to mounting means (5), wherein the first and the second guideway (3, 4) are spaced parallel on a surface of the traction arrangement (1),
a slide (6) movable on the surface and configured for spanning the surface through a lateral motion along a first axis, wherein the slide (6) is arranged essentially perpendicular to the first and the second guideway (3, 4),
a jack (7) connected to the slide (6), wherein the jack (7) is movable along the slide (6) through a lateral motion along a second axis,
the second axis being perpendicular to the first axis, and
a first motor (8) for driving a first belt (2), wherein the first motor (8) is rotatably arranged and controls traction of the first belt (2) such that when the first motor (8) rotates in counterclockwise direction or in clockwise direction, the jack (7) moves along the second axis such that a second position coordinate of the jack (7) along the second axis is adjustable.

2. The traction arrangement according to claim 1, comprising four pulleys (10, 11, 12, 13) that are rotatably mounted on four axles, wherein the axles are laterally displaced from the slide (6) and are configured for guiding the jack (7) along the second axis.

3. The traction arrangement according to claim 2, wherein an arrangement of the axles comprises a rectangular shape such that a position of each one of the four axles corresponds to a position of each corner of the slide (6), wherein each of the corresponding positions are laterally displaced by a predetermined distance to one another.

4. The traction arrangement according to one of the preceding claims, wherein the jack (7) comprises at least one pulley, preferably at least two pulleys coupled to each other, each pulley being movable along the second axis.

5. The traction arrangement according to one of the preceding claims, comprising a second motor (9) being rotatably arranged and controlling traction of a second belt (15).

6. The traction arrangement according to claim 5, wherein when the second motor (9) rotates in counterclockwise direction or in clockwise direction, the jack (7) moves along the first axis such that a first position coordinate of the jack (7) along the first axis is adjustable.

7. The traction arrangement according to one of claims 5 and 6, comprising a further pulley (14) that is configured for connecting the second belt (15) to the second motor (9) via the slide (6).

8. The traction arrangement according to one claims 5 to 7, wherein the traction arrangement (1) is configured for moving the jack (7) stepwise, such that the jack (7) is either moved to the first position coordinate along the first axis and then to the second position coordinate along the second axis or vice versa, or the traction arrangement (1) is configured for moving the jack (7) simultaneously, such that a desired diagonal motion of the jack (7) is provided.

9. The traction arrangement according to claim 8, comprising a stylus connected to the jack (7), wherein the movement of the jack (7) is coupled to the movement of the stylus such that the stylus is moveable stepwise or simultaneously.

10. The traction arrangement according to one of the preceding claims, comprising a computing unit configured for controlling the motion of the first and/or the second belt (2, 15) that is/are relatively moving to the surface of the traction arrangement (1).

11. The traction arrangement according to one of claims 5 to 10, wherein each of the first motor (8) and the second motor (9) is at least partly integrated into a housing of the traction arrangement (1).

12. The traction arrangement according to one of claims 5 to 11, wherein each of the first motor (8) and the second motor (9) comprises at least one of a stepping motor, a servomotor, a hydraulic motor and an electric motor configured for driving a pulley and being coupled to the pulley through a shaft.

13. A method for driving a belt (2, 15), comprising the steps:
a) spacing (21) a first and a second guideway (3, 4) parallel on a surface;
b) arranging (22) a slide (6) essentially perpendicular to the first and the second guideway (3, 4), wherein the slide (6) is moveable on the surface through a lateral motion along a first axis;
c) connecting (23) a jack (7) to the slide (6), wherein the jack (6) is moveable along the slide (6) through a lateral motion along a second axis, the second axis being perpendicular to the first axis; and
d) driving (24) a first belt (2) with a first motor (8) that is rotatably arranged and controls traction of the first belt (2) such that when the first motor (8) rotates in counterclockwise direction or in clockwise direction, the jack (7) moves along the second axis such that a second position coordinate of the jack (7) along the second axis is adjustable.

14. The method according to claim 13, driving (25) a second belt (15) with a second motor (9) that is rotatably arranged and controls traction of the second belt (15) such that when the second motor (9) rotates in counterclockwise direction or in clockwise direction, the jack (7) moves along the first axis such that a first position coordinate of the jack (7) along the first axis is adjustable.

15. Use of the traction arrangement according to one of claims 1 to 12 in at least one of the following applications: in a crane, in a plotter, for driving a steel cable, a rope, a chain and a ball path.
